**Europäisches Patentamt**

**European Patent Office**

**Office européen des brevets**

(11) Publication number: **0 055 366**
**B1**

(12) **EUROPEAN PATENT SPECIFICATION**

(45) Date of publication of patent specification: **18.03.87**

(51) Int. Cl.⁴: **G 06 F 3/037, G 06 K 11/06**

(21) Application number: **81108972.1**

(22) Date of filing: **27.10.81**

(54) **System for remotely displaying and sensing information using shadow parallax.**

(30) Priority: **30.12.80 US 221222**

(43) Date of publication of application:
**07.07.82 Bulletin 82/27**

(45) Publication of the grant of the patent:
**18.03.87 Bulletin 87/12**

(84) Designated Contracting States:
**BE CH DE FR GB IT LI NL SE**

(56) References cited:
**WO-A-80/02490**
**GB-A-1 405 882**
**US-A-3 917 955**

**AMERICAN FEDERATION OF INFORMATION
PROCESSING SOCIETIE PROCEEDINGS OF
THE NATIONAL COMPUTER CONFERENCE,
Dallas, 13th-16th June 1977, A.F.I.P.S. Joint
Computer Conference 1977, vol. 46, AFIPS,
1977, pages 49-53, Montwale (USA); H. FUCHS
et al.: "A system for automatic acquisition of
three-dimensional data".**

(73) Proprietor: **International Business Machines
Corporation
Old Orchard Road
Armonk, N.Y. 10504 (US)**

(72) Inventor: **Edgar, Albert Durr
3912 Eton Lane
Austin, TX 78759 (US)**

(74) Representative: **Bonneau, Gérard
Compagnie IBM France Département de
Propriété Intellectuelle
F-06610 La Gaude (FR)**

(56) References cited:
**AMERICAN FEDERATION OF INFORMATION
PROCESSING SOCIETIE PROCEEDINGS OF
THE NATIONAL COMPUTER CONFERENCE.
ELECTRONIC DESIGN, vol. 28, no. 20,
September 1980, pages 139-143, Rochelle Park
(USA); B.K. FUNK: "CCDs in optical touch
panels deliver high resolution".**

Courier Press, Leamington Spa, England.

## Description

This invention relates to interactive display systems and more specifically to a system for remotely displaying and sensing information using shadow parallox.

The device of this invention performs the functions heretofore requiring several separate devices and technologies. These are reviewed as they relate to display, data input, and remote contact sensing.

Referring first to display, it has been a goal in the display of information in an office environment to minimize the desk space required by a personal display. Prior art alternatives include flat display technologies, such as plasma discharge and liquid crystal, and integration of a display into the work table or desk. It is believed such a "noninvasive" display would facilitate acceptance of a terminal in areas such as principal support.

Referring next to data input, besides the keyboard for the input of coded information, there are diverse means of inputting data to a computer system. These will be examined by questioning: does the technology permit an output image to occur in the same plane as the input data? Can an operator input data by tracing over a printed or photographic image such as a map? Can the operator input data in real time by writing on paper? Can an ordinary writing instrument or even a finger be used to point, or is a special device needed? Can the input device be used on a horizontal desk top? Can images from photographs, books, or other prepared sources be entered? Now the various input technologies are discussed. A photocell, usually mounted on the end of a rod, and used with a CRT or similar refresh device, is called a light pen. In use, the photocell is pointed to a section of the image selected by a user. The photocell will then respond to the point of light produced as the scanned electron beam of the CRT passes under the photocell. The time of this response in relation to the known position of the electron beam indicates the location of the light pen relative to the image. This technology allows in-plane interaction with the image, and of course, possesses inherent image registration. It does not permit graphic tracing, finger manipulation, real time entry on paper, use on a horizontal desk top surface, or the inputting of charts, books, or photographs. A second technology to be discussed is the data pad. A data pad system usually consists of a flat, relatively thin "pad" of specific construction, and a pen, often of specific construction. Many technologies are used, and will not be discussed here as they are not relevant to this invention. Several types of data tablets are made of transparent material, and by placing them over a display such as a CRT, a nearly in-plane interaction is possible. However, there is no inherent image registration and parallax problems prevent accurate pointing. Most data tablets are opaque, and are used quite differently than transparent tablets. Opaque tablets permit graphic tracing, real time entry on paper, and the use of a horizontal desk top surface. A few provide finger manipulation at the expense of precision when using a pick such as a pencil or pen. Many require a special pen to be used. They, of course, do not permit in-plane interaction with a computer image, and cannot input from charts, books, and photographs. The final input technology to be considered is the facsimile scanner, which converts a document into an electronic image. The scanner is the only technology capable of inputting charts, books and photographs, but possesses generally none of the other features being examined. The technology by which this is accomplished may be that of a television pickup tube such as a vidicon, a charge-coupled device with an array of sensors and a shift register, a mechanically rotating drum, or a flying spot scanner. This device gets its name from a "flying-spot" of projected light that rapidly moves across an image to be scanned. A photocell aimed generally at the image will receive more light as the spot passes over a white surface, and less light as the spot passes a black area, thus effectively scanning selected areas of the scene. The first television images were "seen" by a flying-spot scanner using a mechanically rotating disk called a Nipkow disk. Modern flying-spot scanners use a CRT to generate a moving spot. They are popular for television pickup from film and are still used in facsimile scanners by focusing the flying-spot from a high-resolution CRT onto a document in a light-tight box.

Referring finally to remote contact sensing, it may be seen that contact sensing presents a distinct problem from positional sensing within a plane. With a light pen, for example, data-input normally is not desired until the image is touched. When using a data pad for real-time handwritten entry, it is of course vital that when the pen is lifted marginally above the paper that the computer be aware that the line is discontinued. This sensing is generally done either by a mechanical switch or electrical device in the pen, or with a special electrical device in a data pad on which the input is to be written.

As another means of contact sensing, when writing or generating artwork, a human will sense contact by tactile feedback and, in slow precision work, by visual parallax. Using parallax, the image including the pen can be viewed simultaneously from two angles as in the system described in the Article "CCD's in optical touch panels deliver high resolution" by B. Funk in Electronic Design, Vol. 28, September 1980. In the system, a continuous light source illuminates a display area within view of two CCD detectors. The shadow images of a touch stylus focused on both detectors by a slit allows a computer to calculate the stylus coordinates location from a measure of the angles formed to a reference line and the distance between the detectors. But such a system still needs the use of a display as a work area. Only when two objects are in the same plane their apparent separation appears equal from both angles. Parallax is also used to judge distance, angle, and separate distinct objects. Parallax is very difficult to perform with a computer system because not only is high resolution required, but the techniques of pattern recognition necessary to find and separate objects are not yet generally of adequate quality, despite much work in this field which is considered a subject of artificial intelligence. The problem is that surface details must be used to derive correlations, and these details themselves camouflage dimensional boundaries.

In an article by Fuchs et al. entitled "A system for automatic acquisition of three dimensional data", published on pages 49—53 of the proceedings of the National Computer Conference of the American Federation of Information Processing Societies, 13—16 June 1977 (Volume 46), a system is described in which the location of an object is determined by illuminating it with a scanning source and detecting the positions at which the light is reflected from the object.

By combining all the desired features of the display, data input, and contact sensor discussed above, the resulting device would form a touch sensitive image devoid of imaging and sensing hardware in the display area, permitting an ordinary paper on an ordinary desk to become a display and also to sense contact with an ordinary pencil or even a finger. In the prior art, such a device was not possible.

The object of this invention is therefore a system for remotely sensing contact of a pen, pencil, finger, other pick with a surface.

This object is met by the invention as claimed in claim 1.

The invention is now described with reference to the following drawings:

FIG. 1 shows the environment in which the system operates.

FIG. 2 diagrams the operation of the invention.

FIG. 3 depicts shadowing perspectives with flying-spot scanning.

FIG. 4 shows a two-sensor arrangement for shadow parallax.

FIG. 5 illustrates the use of shadow parallax in remote contact sensing.

FIGS. 6—7 portray alternate forms of the invention.

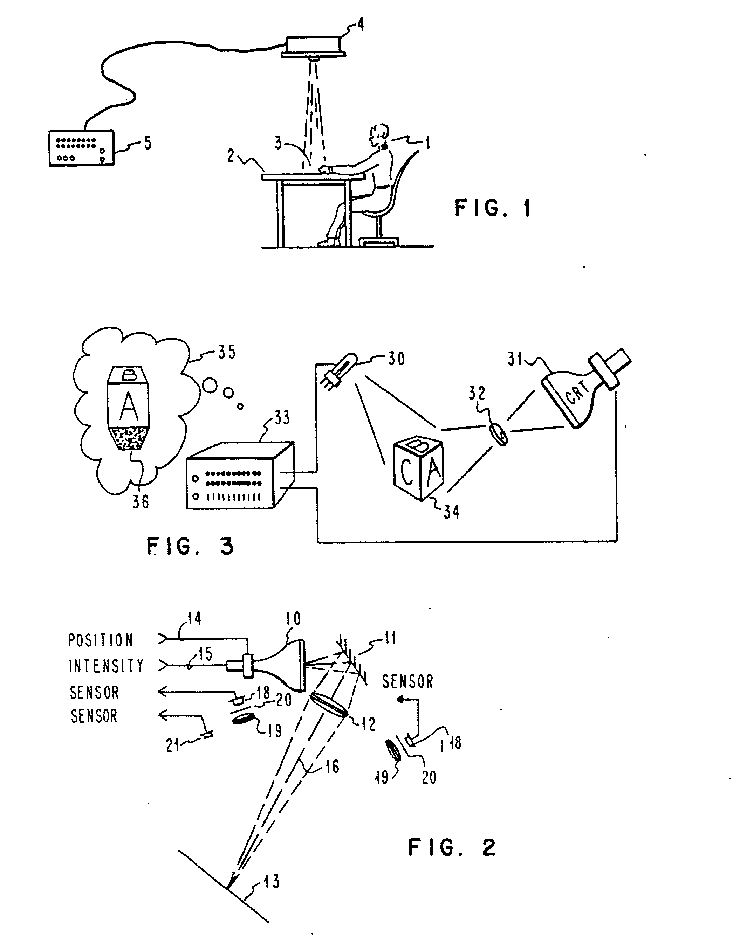

Referring now to FIG. 1, by way of illustration a typical operating environment is presented. An operator 1 is seated at work area 2, and views a projected image 3, which may be focused on a document, work piece, or any other material. The image is projected from device 4, which contains both a display system and sensors to be discussed in detail later. Device 4 is connected to Computer system 5 including a central processor and storage which controls what is displayed by device 4 and interprets the information received by the sensors in device 4 to form a complete system. This application will be concerned with the operation of device 4, its effect on image 3 and its capacity to input data from work area 2, and with the method used in computer 5 to initially interpret the data received by the sensors in device 4.

The device 4 of FIG. 1 is detailed in FIG. 2. The image produced by a projection kinescope, or high intensity CRT 10, is reflected by mirror 11 and focused by lens 12 onto work surface 13. The work surface 13 is equivalent to the work area 2 in FIG. 1. The image formed by CRT 10 is controlled by position and intensity signals 14 and 15, respectively, input from conventional computer and drive circuitry (not shown). The high intensity CRT could, of course, be replaced by a laser and acoustic scanner, or equivalent technology. The direction of projection along line 16 is not required to the perpendicular to the work surface 13. An angle other than perpendicular may be chosen to minimize the shadowing of the image by the operator. Unlike a lamp, specular reflection off the work pieces of the projected image improves image brightness and contrast. Geometric distortions of angled projection are correctable in the deflection control circuitry, and focus is corrected by a lens-image tilt as is common practice in view camera photography. The image formed on work area 13 is completely non-invasive in that there is no display hardware in the area of the image. The image may be formed on many materials, for example, if projected onto a paper form, a forms fill-in function can be easily performed, with the projected image and printed image both easily seen and distinguished from one another.

Continuing now with FIG. 2, photocells 18 are positioned to view the image projected on work area 13, acting as flying-spot scanner type sensing elements. Photosensors 18 are identical assemblies that view the image from different angles. The use and positioning of each one will be discussed later. However, unlike a flying-spot scanner, the sensing from the projected image must operate in an environment of normal work area illumination, which typically in an office includes fluorescent lights that flicker at the 120 Hz power cycles of the 60 Hz power line.

Methods of suppressing the effects of ambient light will now be presented. The angle of view by photocell 18 is limited by lens assembly 19 to include only the projected image on plane 13. However even after this angle limiting the magnitude of the ambient light reaching sensor 18 is typically several times greater than the magnitude of light originating from the projected image. A colored filter 20 matched to the projected color and counter-matched to the ambient light color further reduces the effect of ambient light. If a narrow-band phosphor is used in CRT 10 and those bands are separate from the mercury bands in fluorescent lighting, a narrow band interference filter or spectral separator can be used for a greater effect. A context sensor 21 can be added to purposefully receive primarily ambient light. This signal of ambient light is then subtracted from the signal from sensor 18, leaving in purer form a signal representing the magnitude of light originating from the projected image alone. Also the intensity control 15 to the CRT may be modulated which, in conjunction with a fast-decay phosphor in CRT 10, causes photocell 18 to receive an amplitude modulated signal, with amplitude corresponding to the reflectance of the point being scanned on work area 13. Because the harmonics from a fluorescent tube typically fall off at about 6 dB/octave above 120 Hz, modulation raises the desired signal above the noisy baseband to a frequency with little interference. The modulation may be performed in hardware, or in software by alternately toggling the beam on and off and reading the light in each state. To summarize, the effect of ambient light is removed by a combination of spatial filtering, spectral filtering, context nulling, and modulation-demodulation.

In conjunction with the ambient filtering, the unit is able to perform as a flying-spot scanner, inputting images from documents, forms, photographs, and other facsimile sources laying on an ordinary work surface. It is also able to display information concurrent with inputting information from the same plane on which the display appears, with both input and output functions featuring inherently perfect spatial registration because the same "flying-spot" performs both functions. An example of an application using this feature is interactive forms fill-in, allowing a computer to "highlight" lines to be filled in while projecting related data or suggested responses. Another example is an interactive assembly station, allowing a computer to find and "highlight" parts, to show by direct pointing exactly where a part is to go, and to check for visually correct assembly.

To permit general data entry, the system must be capable of remotely sensing contact between a pointer or pick, such as a pencil or finger, and the work surface being viewed. This will be accomplished with a technique which is given the name "shadow parallax" as is now described.

Referring now to FIG. 3, consider the flying-spot scanner consisting of photosensor 30 and projection CRT 31 with lens 32. A computer 33 viewing the scene 34 via the photosensor 30 would see objects in the perspective 35 of the projection scanner light source, CRT 31 and lens 32. The photosensor 30 through which the computer views the scene 34 appears in the image 35 as a light source, capable of casting shadows 36, but not affecting perspective. Note the reciprocal effect of the source-sensor arrangement or shadows and perspective compared to conventional imagery.

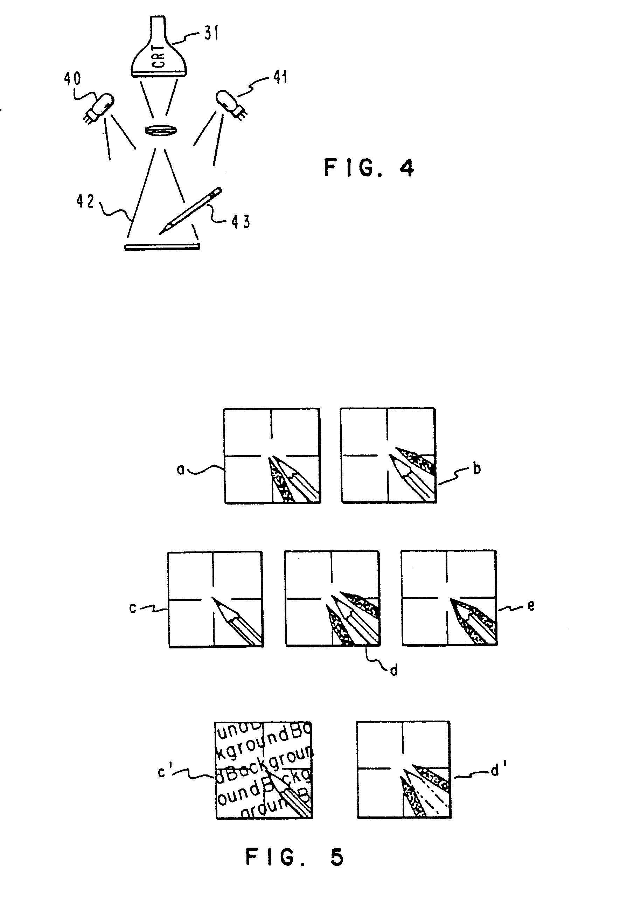

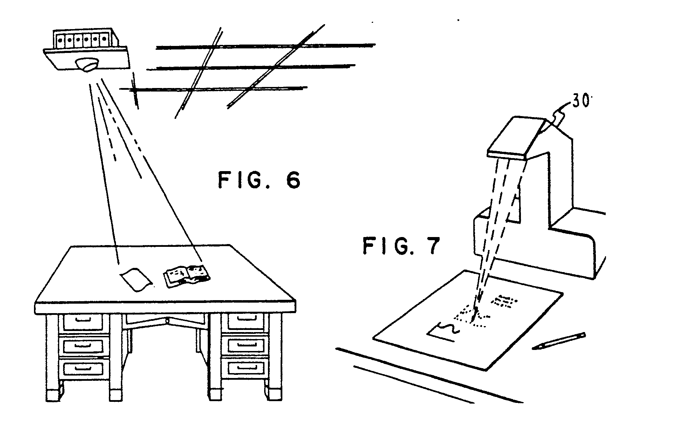

Next consider the two sensor arrangement of FIG. 4. Depending on which sensor 40 or 41 is selected through which to image scene 42, a deep shadow will appear either on the left or right of the pencil 43, cast by the irtual source, which is the selected one of the two sensors 40 or 41. These images are shown in FIG. 5 as a and b. Note that both shadow images can be viewed independently and simultaneously, without interference between them. Unlike binocular vision, which permits several perspectives but with the same shadows, the nature of a flying-spot scanner does not permit independent perspectives, but does permit a plurality of independent shadows. The latter effect, called here "shadow parallax", as opposed to perspective parallax, has strong advantages in the present invention. Shadow parallax is the complement of binocular vision.

The image formed by taking the mathematical maximum of the signal point by point from the left and right sensors of FI G. 4 is shown in c of FIG. 5 to be free of all shadows. It may be used to capture the location of the pencil using conventional methods of pattern recognition. The image formed by taking the point by point minimum of the left and right sensors is shown in d of FIG. 5 to have very deep shadows on both sides of the pencil. As contact is made with the surface, the two shadows merge, as in e of FIG. 5. After the pencil location is determined from c, the ability to distinguish between states contrasted in d and e is simple. A triangle of three sensors, or more, would aid in sensing contact at arbitrary pick angles.

Common perspective parallax refers to distances relative to the sensor, and is unable to measure the distance to surfaces, such as white paper on which surface details are extremely faint, graph paper for which the correlation solution would be multi-valued. Shadow parallax, on the other hand, directly measures the third dimension relative to the writing surface, and thus performs equally as well with thin paper, paper pads, or an irregular surface such as a calculator keyboard or bound notebook, or with clean white paper, graph paper, or documents. In addition to better function, shadow parallax also realizes a cost advantage, as only the sensor, not the scanner, is duplicated, and less computing power is needed as the difficult image correlation of different visual perspectives is obviated.

Referring again to FIG. 5, illustration c represents the shadowless image which the computer could use to track the x-y position of the pencil. In practice, a distracting background would complicate tracking, as illustrated in c'. Dividing the image of d by c, with appropriate provision for the case of c approaching zero, cancels the pencil, text, and other distractions, leaving only the very black shadows of d' for easy computer tracking, free from camouflaging patterns.

Referring now to FIG. 6 and FIG. 7, alternate physical forms of the invention are portrayed. FIG. 6 shows a system with the entire module ceiling mounted in a recessed box resembling a standard 2 × 4 feet fluorescent light fixture module. A similar alternative could form the assembly to resemble a track light fixture which could be mounted from a suspended rail. In both cases, the system could draw power through the ceiling wiring as would a lamp, and could be connected to a computer also via hidden ceiling wiring. Mounting the system in the ceiling would provide the most non-obtrusive arrangement. A second alternative is shown in FIG. 7, in which an upward pointing CRT is contained in the vertical "neck" and a lens with two mirrors 30 is held in the head to redirect the image down at a desirable angle. This system, resembling a "desk lamp", would be portable and require no special installation. Other configurations are, of course, possible, and these are given as samples and not limits.

Microfiche is unlikely to replace books in libraries, and displays are unlikely to replace papers in offices. People want something tangible to hold, to interpret without a machine, and to spread out on a desk. This invention provides the only system capable of turning ordinary paper into an interactive tablet and display, and conversely of turning an electronic document into a desk top image resembling ordinary paper in many functional ways. The method of this invention provides a device that is equally at home performing the jobs of a display, a tablet, or a scanner, or all three at once, and all on the flat, gadget free, surface of an ordinary desk top. The operator is free to use ordinary paper with an ordinary pencil on an ordinary desk top, seeing nothing in the display area but a touch-sensitive image devoid of hardware.

## Claims

1. System for displaying and sensing information which comprises a data processing device (5, 33) with storage, a display means for displaying on a surface an image of information stored in said storage, a passive pointer (43) for identifying a position on said image and sensor means (30, 40, 41) which, in combination with the data processing device, determine a point of contact between said pointer and said surface and thereby identify said position in said image; said system being characterized in that:
— said display means is a projection device for projecting said image onto a working surface (2, 13) remote from said display means;
— said sensor means include a single flying spot scanner light source (31, 32) and at-least two sensors (40, 41) for sensing the intensity of the light from said light source (31, 32) which is reflected from said working surface (2, 13), said sensor means and said light source being so placed with respect to one another remote from said working surface that each sensor detects an independent image of a virtual shadow (a, b; FIG. 5) caused by the pointer obscuring light reflected from said working surface when the pointer is positioned over that surface; and
— said data processing device (5, 33) superposes the images of said pointer sensed by said sensors (d; FIG. 5) whereby contact between the pointer and said working surface is determined, and hence said position in said image is identified, using shadow parallax by detecting the merging of the images of said virtual shadows.

2. System according to claim 1 wherein said sensor means (30, 40, 41) sense and input said image of information in correlation with the information already stored in said storage.

3. System according to claim 1 or 2 wherein said display means (10, 31) is a cathode ray tube.

4. System according to claim 1, 2 wherein said display means (10, 31) is a laser scanner.

## Patentansprüche

1. System zum Darstellen und Abtasten von Informationen, zu dem eine Datenverarbeitungsvorrichtung (5, 33) mit Speicherkapazität, ein Darstellungsmittel zum Darstellen eines Bildes der gespeicherten Daten auf einer Oberfläche, ein passiver Zeiger (43) zum Identifizieren einer Position auf dem genannten Bild und Sensormittel (30, 40, 41) gehören, die in Verbindung mit der Datenverarbeitungsvorrichtung einen Kontaktpunkt zwischen dem genannten Zeiger und der genannten Oberfläche bestimmen und dadurch die genannte Position im genannten Bild identifizieren;
wobei das genannte System dadurch gekennzeichnet ist, dass:
— das genannte Darstellungsmittel eine Projektionsvorrichtung ist, um das genannte Bild auf eine vom genannten Darstellungsmittel getrennte Arbeitsfläche (2, 13) zu projizieren;
— das genannte Sensormittel eine Lichtquelle (31, 32) mit Lichtpunktabtaster und zumindest zwei Sensoren (40, 41) zum Feststellen der Intensität des von der genannten Lichtquelle (31, 32) stammenden Lichtes aufweist, das von der genannten Arbeitsfläche (2, 13) reflektiert wird, wobei die genannten Sensormittel und die genannte Lichtquelle so im Verhältnis zueinander und zur genannten Arbeitsfläche angeordnet sind, dass jeder Sensor sein eigenes Bild eines virtuellen Schattens detektiert (a, b, Abb. 5), der vom Zeiger verursacht wird, wenn er das von der genannten Arbeitsfläche reflektierte Licht verdunkelt während er über dieser Fläche positioniert ist, und
— die genannte Datenverarbeitungsvorrichtung (5, 33) die Bilder (d, Abb. 5) des genannten Zeigers, die von den genannten Sensoren entdeckt werden, in Deckung bringt, wodurch der Kontakt zwischen dem Zeiger und der genannten Arbeitsfläche festgestellt und damit die genannte Position im genannten Bild festgelegt wird, wozu durch Detektieren des Vermischens der Bilder der genannten virtuellen Schatten die Parallaxe der Schatten benutzt wird.

2. System nach Anspruch 1, bei dem die genannten Sensormittel (30, 40, 41) das genannte Informationsbild im Verhältnis zu schon im genannten Speicher eingelesenen Information detektieren und einspeichern.

3. System nach Anspruch 1 oder 2, bei dem das genannte Darstellungsmittel (10, 31) eine Kathodenstrahlröhre ist.

4. System nach Anspruch 1 und 2, bei dem das genannte Darstellungsmittel (10, 31) ein Laser-Scanner ist.

**Revendications**

1. Système pour l'affichage et la détection d'informations qui comprend un dispositif de traitement de données (5, 33) avec mémoire, un moyen d'affichage pour afficher sur une surface une image des informations emmagasinées dans ladite mémoire, un pointeur passif (43) pour identifier une position sur ladite image et des moyens de détection (30, 40, 41) qui, en combinaison avec le dispositif de traitement de données, détermine un point de contact entre ledit pointeur et ladite surface et identifie ainsi ladite position de ladite image,

ledit système étant caractérisé en ce que:

— ledit moyen d'affichage est un dispositif de projection de ladite image sur une surface de travail (2, 13) disposés à distance dudit moyen d'affichage,

— lesdits moyens de détection comprennent une seule source de lumière d'analyseur à spot mobile (31, 32) et au moins deux détecteurs (40, 41) pour détecter l'intensité de la lumière issue de ladite source de lumière (31, 32) qui est réfléchie par ladite surface de travail (2, 13), lesdits moyens de détection et ladite source de lumière étant disposés les uns par rapport aux autres à distance de ladite surface de travail, de façon que chaque détecteur détecte une image indépendante d'un masque virtuel (a, b; figure 5) provoqué par le pointeur obscurcissant la lumière réfléchie par ladite surface de travail lorsque le pointeur est positionné sur cette surface, et

— ledit dispositif de traitement de données (5, 33) superpose les images dudit pointeur détectées par lesdits détecteurs (d, figure 5), ce qui permet la détermination du contact entre le pointeur et ladite surface de travail, et donc l'identification de ladite position dans ladite image en utilisant la parallaxe du masque en détectant la convergence des images desdits masques virtuels.

2. Système selon la revendication 1 dans lequel lesdits moyens de détection (30, 40, 41) détectent et appliquent en entrée ladite image d'informations en corrélation avec les informations déjà emmagasinées dans ladite mémoire.

3. Système selon la revendication 1 ou 2 dans lequel ledit moyen d'affichage (10, 31) est un tube à rayons cathodiques.

4. Système selon la revendication 1, 2 dans lequel ledit moyen d'affichage (10, 31) est un analyseur à laser.

FIG. 1

FIG. 3

POSITION

INTENSITY

SENSOR

SENSOR

SENSOR

FIG. 2

0 055 366

FIG. 4

FIG. 5

FIG. 6

FIG. 7